# EUROPEAN PATENT APPLICATION

(11) **EP 2 180 755 A1**
(43) Date of publication of application: **28.04.2010**
(21) Application number: 09173811.2
(22) Date of filing: 22.10.2009
(51) Int. Cl.: H04W 84/18

(54) **Mobile wireless-communication network with detection and affiliation of stranger nodes, and corresponding methods of exploration and request for affiliation**

(30) Priority: 22.10.2008 IT TO20080778
(71) Applicant: SELEX COMMUNICATIONS S.p.A., 16151 Genova (IT)
(72) Inventor: Armani, Claudio, 16129, GENOVA (IT); Loreti, Pierpaolo, 00178, ROMA (IT); Porzio Giusto, Pietro, 00189, ROMA (IT); Mazzenga, Franco, 00145, ROMA (IT); Bianchi, Giuseppe, 00197, ROMA (IT)
(74) Representative: Jorio, Paolo

(57) **Abstract**

A mobile wireless-communication network, formed by a plurality of nodes (1) that each present a first station (BS) and a second station (MS) equipped with transmitting/receiving means (4, 5). The network includes at least one root node (1r) with a role of network manager, a leaf node (1l), and optionally an internal node (1b) connected to the root node through a second station (MS) of its own and to the leaf node through a first station (BS) of its own. The leaf node (1l) communicates with the internal node (1b) or with the root node (1r) through its own second station, but is not connected to any of the nodes of the network (10) through its own first station. The root node (1r) can generate an activation signal (131) for activating temporarily the first station (BS) of the leaf node (1l). The first station (BS) of the leaf node possesses emitters activated temporarily by the root node for issuing (133) an exploration signal containing at least one identification code (13) that indicates the degree of importance of the network and moreover possesses receivers activated temporarily by the root node for receiving (134) at least one signal of request for affiliation by a stranger node (SN), not belonging to the network (10), and for transmitting the signal of request for affiliation to the root node. Finally, the root node can generate a signal of acceptance (138) or refusal (140) of the request for affiliation on the basis of the signal of request for affiliation.

## Description

The present invention relates to a mobile wireless-communication network with detection and affiliation of stranger nodes and corresponding methods of exploration and request for affiliation.

Mobile-radio networks are known, comprising a plurality of mobile nodes connected to one another to provide a tree structure or a mesh structure.

In a network of a tree type there is generally present a node for managing the network, referred to as "root node", which concentrates in itself a multitude of functions of network control and management; affiliated to the root node are, by means of a respective point-to-point bi-directional connection, one or more internal nodes that in turn affiliate further internal nodes and/or leaf nodes. The leaf nodes are terminal nodes of the network and are not enabled to affiliate other nodes, but can only communicate with the internal node to which they are affiliated or with the root node if they are affiliated directly to the latter. The internal nodes support a bi-directional connection with an affiliating internal node (or with the root node) and a plurality of bi-directional connections with affiliated internal nodes and/or leaf nodes.

As an alternative to a tree network, it is possible to provide a network with mesh topology, in which generic internal nodes belonging to the network can be affiliated to a plurality of internal nodes and can affiliate a plurality of internal nodes or leaf nodes. In this way, the internal connections to the network prove redundant, in favour of a greater robustness to faults.

The nodes of the network, whether of a tree type or of a mesh type, can be moving with respect to one another, and some nodes, moving away from their own affiliating node, can lose the connection with the network to which they belong. Likewise, some nodes extraneous to the network can approach just the leaf nodes of the network. However, on the basis of what has been explained previously, nodes extraneous to the network, in electromagnetic visibility to leaf nodes alone, cannot set up any type of connection to the network.

Consequently, particularly felt is the need to have available procedures that enable the network to re-organize itself, for managing at best the possibilities of affiliation of new nodes to the network itself in various operating contexts, even when the new nodes are in electromagnetic visibility of leaf nodes alone.

According to the present invention, a mobile wireless-communication network with detection and affiliation of stranger nodes, and the corresponding methods of exploration and request for affiliation are provided, as defined in Claim 1, Claim 3, and Claim 10, respectively.

For a better understanding of the present invention a preferred embodiment is now described, purely by way of nonlimiting example, with reference to the attached drawings, wherein:
- Figure 1 shows a schematic representation of a network node according to the present invention;
- Figure 2 shows a network formed by a multitude of nodes of the type shown in Figure 1;
- Figure 3 is a schematic representation of a transmission frame made up of a multitude of time slots, used by the nodes of Figure 1;
- Figure 4 shows in greater detail a time slot of the transmission frame of Figure 3;
- Figure 5 shows a block diagram that represents the steps of a method implemented by the node of Figure 1 not belonging to the network of Figure 2; and
- Figure 6 shows a block diagram that represents the steps of a method implemented by the network of Figure 2.

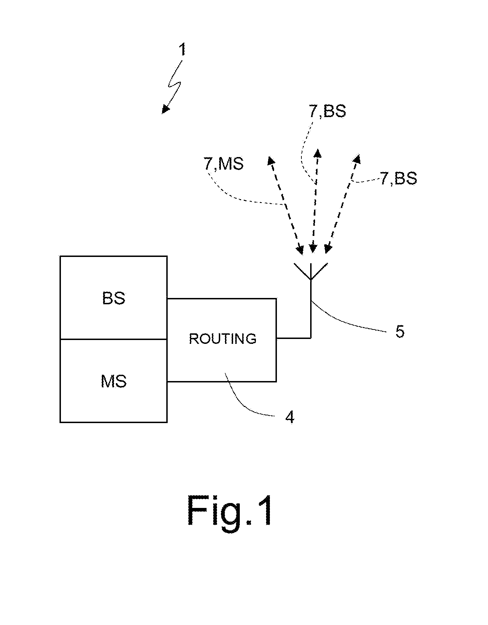

Figure 1 shows a schematic representation of the structure of a generic node 1. The node 1 comprises a base station BS and a mobile station MS, which communicate with one another and, via a routing element 4, with a common antenna 5. The base station BS and the mobile station MS can be commercially available devices of a COTS (Commercial On The Shelf) type or else may be implemented in a common set of electrical circuits and in a single software architecture. For example, they can be implemented as described in the Italian patent application No. TO2008A000488 filed on June 20, 2008.

The routing element 4 may, for example, be a circulator, for routing in a suitable way the signals generated by the base stations BS and mobile stations MS, which must be transmitted by means of the antenna 5, as well as the signals at input to the antenna 5, bound for the base station BS or for the mobile station MS. Alternatively, the base station BS and the mobile station MS can each be provided with an independent antenna of its own (solution not shown).

The base station BS supports a plurality of bi-directional connections 7 of a point-to-multipoint type, whereas the mobile station MS supports a single bi-directional connection 7 of a point-to-point type.

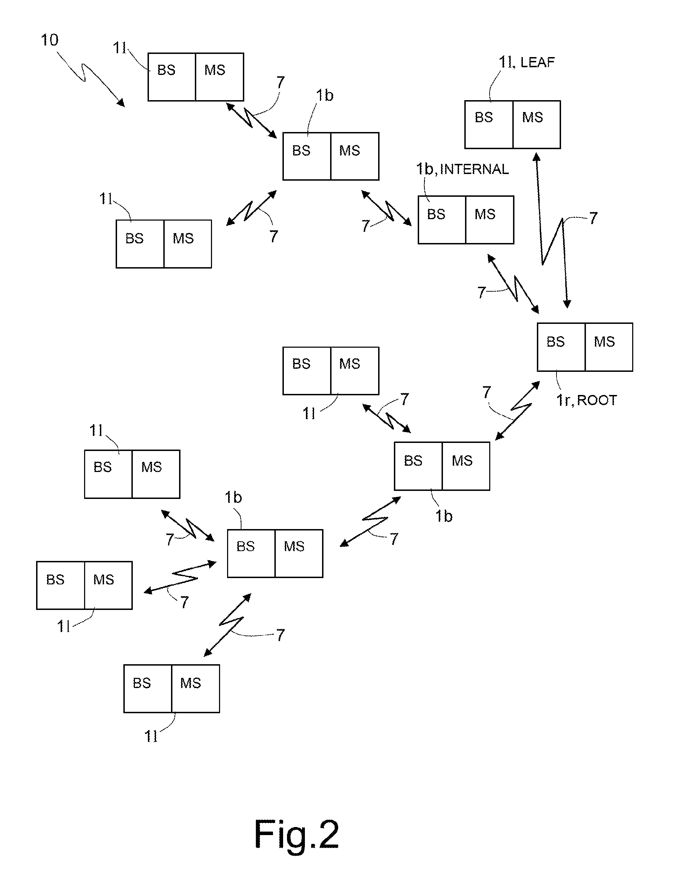

Figure 2 shows an example of a mobile network 10 with tree structure, formed by a plurality of nodes 1 of the type represented in Figure 1.

In particular, the mobile network 10 comprises a root node 1r, having functions of network control and management. The root node 1r supports, through its own base station BS, a plurality of bi-directional connections 7 (schematically represented in Figure 2 by means of arrows) with respective internal nodes 1b and leaf nodes 11. In turn, the internal nodes 1b and leaf nodes 11 are connected to the root node 1r by means of the respective mobile station MS.

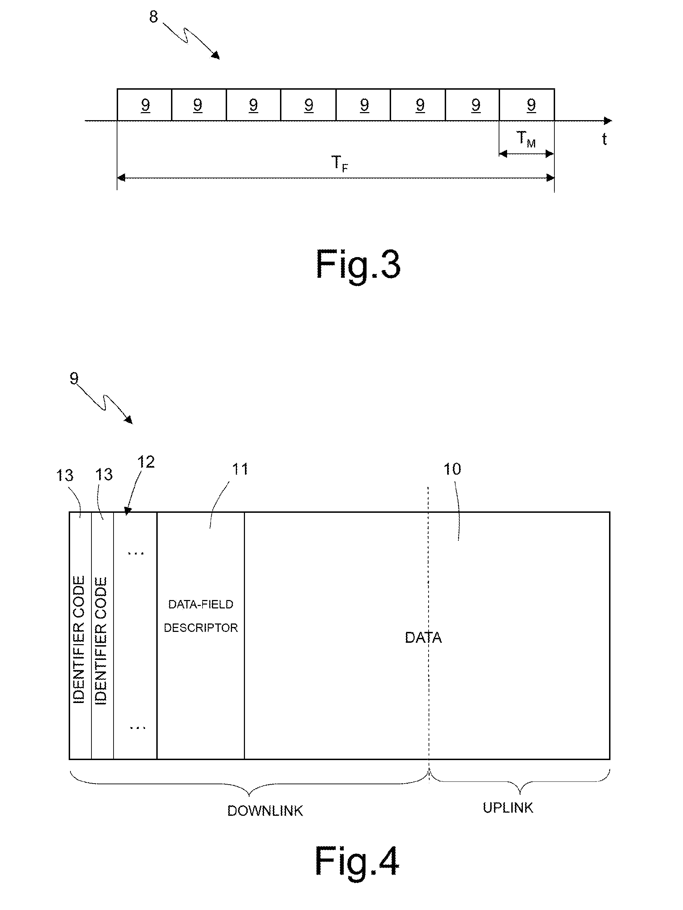

A generic node 1 is defined as leaf node 11 when to its base station BS there is not assigned a communication resource designed for the communications between the nodes of the network (for example, a time slot as illustrated in what follows with reference to Figure 3). Consequently, the base station BS of the leaf nodes 11 cannot set up a connection with any mobile station MS of any other node of the mobile network 10. In particular, the leaf nodes 11 cannot communicate directly with one another, but can only set up communications that transit on internal nodes or on the root node.

The internal nodes 1b are instead able to support, by means of their base station BS, a plurality of bi-directional connections 7 with respective internal nodes 1b and leaf nodes 1l.

Each connection 7 can be based upon a transmission technique of a TDD (Time Division Duplex) or FDD (Frequency Division Duplex) type. In the case of the TDD transmission technique, the connections 7 of each base station BS are managed using a division of a temporal type to prevent any interference; according to the FDD transmission technique, instead, assigned to each connection 7 is a respective frequency sub-band, and each sub-band is chosen within a wider operating frequency band.

Irrespective of the transmission technique used, the transmission frame can be divided into time slots.

Figure 3 shows a transmission frame 8, of total duration T_{F}, in the case of the example considered made up of eight slots 9, each of duration T_{M}. It is clear that the frame 8 can have a duration different from the one indicated and comprises a number of slots 9 different from eight, for example equal to the number of nodes 1 forming part of the mobile network 10. Likewise, different slots 9 can have different duration. In particular, the choice of the duration of each individual slot 9 can vary according to the transmission capacity of the mobile network 10 as a whole and according to the distribution of traffic offered to the individual root nodes 1r and internal nodes 1b of the mobile network 10 of Figure 2.

In transmission according to the TDD technique, each slot 9 is reserved for transmission and reception by a base station BS of one of the nodes 1 belonging to the mobile network 10 of Figure 2 to and from a respective mobile station MS of another node 1 which also belongs to the mobile network 10. For this purpose, each slot 9 is used by the base station BS in part for the transmission of data on an uplink channel, and in part for the reception of data on a downlink channel, as described hereinafter with reference to Figure 4.

In this way, transmission and reception do not interfere with one other and it is necessary for nodes which communicate directly to be synchronized with one another.

Instead, in transmission by means of the FDD technique, the uplink and downlink channels occupy different frequencies.

Within the frame 8, some slots 9 are used for normal communication between nodes (transmission/reception of data packets), whilst other slots 9, referred to in what follows as "management slots", can be reserved for operations of management of the mobile network 10. The position of the management slot within the frame 8 is not pre-determined, but can vary in the course of the network activity depending, for example, upon the topological variations caused by entry or exit of nodes 1 or, in general, following upon changes of the conditions of operativeness (for example, a number of slots 9 can be used as management slots in conditions of reduced network traffic; instead, in conditions of intense network traffic, none of the slots 9 can be dedicated to management operations). In normal conditions, just one slot 9 per frame 8 is used as management slot.

As shown in Figure 4, the slots 9 can present an internal division of various types, and typically are internally divided into an uplink section and a downlink section. The slot 9 of Figure 4 has a data field 10, containing the data to be transmitted (for the mobile station MS in the uplink section, for the base station BS in the downlink section) and to be received (for the mobile station MS in the downlink section, for the base station BS in the uplink section); a data-field descriptor field 11, containing the indications on how the nodes 1 that communicate with one another must interpret the contents of the data field 10 and how they can exploit them; and a node-identifier field 12, which conveys one or more identifier codes 13, for example numeric sequences, which identify uniquely, within the mobile network 10, the time slot 9 in which the base station BS of the node 1 operates for communication in transmission/reception. In addition, the identifier codes 13 can indicate a degree of importance of the mobile network 10. As an alternative or in addition thereto, the identifier codes 13 can be used for identifying the node 1 the base station BS of which exploits a slot 9 for the communication in transmission/reception; or again, the identifier codes 13 can identify particular states of the mobile network 10, such as a temporary inaccessibility consequent upon management operations in progress, and undefined uses that can be specified on the occasion of future needs. Finally, one or more identifier codes 13 can be reserved for identifying the management slot.

In addition to the aforesaid fields there are other fields, typical of the transceiver system that is used, necessary for setting up communications in transmission/reception, for example fields for the synchronizations, the control of the transmission power, the measurement of the propagation delay, etc. These fields are not indicated in Figure 4 because they are not inherent in the present invention.

Advantageously, associated to each base station BS is a group of identifier codes 13. In this case, since each group of identifier codes 13 comprises a number of identifier codes 13, it is possible to use a single identifier code 13 for identifying the slot 9 in which the base station BS considered operates, and assign the other identifier codes 13 belonging to the same group to further parameters of the mobile network 10, in particular for defining a value regarding the degree of importance of the network (which, for example, is linked to the number of nodes 1 within the mobile network 10).

If, as an alternative, a small number of identifier codes 13 is assigned to each base station BS (for example, a single identifier code 13 for each base station BS), the remaining identifier codes 13 can be assigned to the management slots. In this case, the identifier codes 13 of the management slots can be used for identifying further parameters of the mobile network 10 (among which, for example, the degree of importance of the network and the type of node 1, root, internal, or leaf, that issues the signals). According to this solution, given the same number of identifier codes 13 altogether available, the number of identifier codes 13 that can be used for identification of the further parameters of the mobile network 10 is greater.

The degree of importance of the network can vary with the evolution of the mobile network 10 itself. Its initial value is defined by the root node 1r at the moment of creation of the mobile network 10, on the basis of one or more parameters. One parameter may, for example, be the number of nodes 1 belonging to the mobile network 10. In this case, the network manager (in the example considered, the root node 1r) modifies the degree of importance of the network in the case of loss of nodes 1 or of affiliation of further nodes 1.

The information on the degree of importance of a network can be useful in the case where two mobile networks 10 approaching one another decide to merge to form a single mobile network. In this case, the mobile network 10 with highest degree of importance could have the priority on the decisions to be undertaken for merging.

If two mobile networks 10, approaching one another, come into radio contact, they can decide to merge. In this circumstance, to prevent the possibility of a situation of parity of degree from arising in the comparison between the degrees of importance of the two networks, which would render it impossible to establish which of the two networks is to be the network that acquires one or more nodes from the other network, and which is the network that yields one or more nodes, the degree of importance of the network may be altered by an amount that varies in time, for example a random value selected within a certain range of values.

All the nodes 1 of the mobile network 10 are enabled to receive signals via their own mobile station MS and, if the quality of the signals received is sufficiently good, can decode said signals. In the case of the TDD technique (or in other particular cases in which the hardware or the software pose some limitation), the reception of signals by the mobile stations MS can occur only if the respective node 1 is not involved in transmission.

In particular operating conditions, it may happen that one or more stranger nodes SN not belonging to the mobile network 10, approaching just the leaf nodes 11, are in electromagnetic visibility of the leaf nodes 11, but not of the internal nodes 1b and hence cannot be detected.

To overcome said drawback, under co-ordination of the root node 1r, the leaf nodes 11 periodically activate their own base station BS for transmitting, in one of the management slots, a signal that can be easily received and decoded by stranger nodes SN. Said signal contains the identifier code 13, as described previously, and information essential for enabling said stranger nodes SN to request affiliation to the mobile network 10. For instance, in addition to the degree of importance of the network implicitly contained in the identifier code 13, the stranger nodes SN can receive synchronism information, safety parameters, power levels, etc.

In turn, when a stranger node SN, having, for example, the structure of the node 1 shown in Figure 1, turns on, it sets under way a series of procedures (described in detail in what follows) to look for a mobile network 10 that is operative and possibly to affiliate therewith. If the mobile network 10 is not detected, or if the request for affiliation is rejected, in the stranger node SN further procedures are activated (which do not form part of the present invention, and are hence not described) for the constitution of a new mobile network 10.

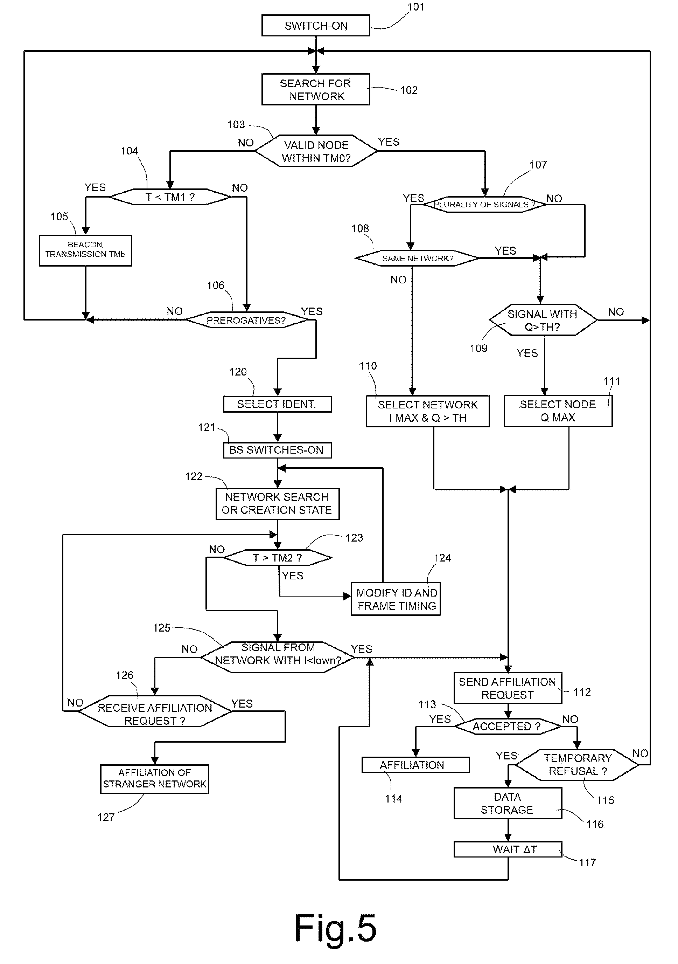

Figure 5 shows a block diagram that represents the steps of search for a mobile network 10 carried out by a stranger node SN when it turns on and, once the mobile network 10 is detected, of request for affiliation. Said steps can be repeated cyclically.

Initially (step 101), the stranger node SN switches on. Then (step 102), the stranger node SN starts the search for an active network by analysing the signals that it detects with its own antenna 5. A detected signal is considered valid if it conveys messages that have a structure and contain data (for example, and in particular, the identifier codes 13) that the stranger node SN is able to recognize and interpret.

The information regarding the structure of the messages carried and the data contained therein are preferably stored in a permanent memory within the stranger node SN directly by the constructor of the node 1. If it were subsequently to become necessary to modify the information regarding the structure of the messages and of the data, it would be sufficient to update this information in all the nodes 1 that could form part of the mobile network 10. For reasons of practicality, it is advisable to execute this operation of updating when the nodes 1 are not connected to a mobile network.

The search step 102 has a pre-defined duration TM₀. If within the time TM₀ the stranger node SN detects one or more signals that carry identifier codes 13 deemed valid, then the affiliation procedure is set under way.

In particular, the stranger node SN verifies whether it has received just one signal or a number of signals (step 107). If a number of signals are detected (output YES) and all the signals detected come from the same mobile network (output YES from step 108), or else, if just one signal is detected (output NO from step 107), the stranger node SN evaluates the quality of the signals (step 109), for example by comparing the power of the detected signal with a pre-set threshold value and selects (step 111) the node with a higher signal quality.

Different signals are considered as coming from the same mobile network 10 if they have the same frame timing, within the tolerances due to the propagation delays, and if they have the same degree of network importance (for example, contained in the identifier code 13).

If, instead, the signals detected do not come from the same mobile network (output NO from step 108), the stranger node SN selects the node belonging to the mobile network with the highest degree of importance from among the ones detected and higher than its own degree of importance, and having at the same time a sufficient quality of the signal, for example with a power higher than the pre-set threshold (step 110).

If none of the signals detected has a sufficient quality or has a degree of importance lower than that of the stranger node SN (output NO from step 109), the stranger node SN returns to the search step 102.

After selection of the network and/or of the node envisaged in steps 110 and 111, the stranger node SN sends a request for affiliation to the selected node (step 112). If the request for affiliation is accepted (output YES from step 113), the stranger node SN comes to form part of the network, initially as leaf node (step 114); if, instead, the request for affiliation is refused (output NO from step 113), the stranger node SN receives from the refusing node a refusal code (step 115), for example a numeric sequence known to both nodes. Said refusal code can indicate to the stranger node SN the possibility of re-attempting affiliation after a certain time interval or can indicate a complete refusal of the affiliation and possibly the reasons for said refusal. The stranger node SN evaluates said code and, in the case of temporary refusal (output YES from step 115), stores (step 116) the frame timing and the temporal position of the slot that are currently used during the request for affiliation, and reattempts affiliation after a certain time interval ΔT (step 117), for example equal to 2 s. Instead, in the case of definitive refusal (output NO from step 115), the stranger node SN returns to the search step 102.

If during the search step 102 the stranger node SN does not detect any valid identifier code 13 within the time TM₀ (output NO from step 103), and a time TM₁ has not yet elapsed, then (output YES from step 104) the stranger node SN carries out a "beaconing" procedure (step 105) that consists in transmitting a beacon for a time TM_{b}. In the beacon, the stranger node SN includes an identifier code 13, which is specific of the beaconing mode. The beacon signals are transmitted with a cadence of their own and, as has been said, with a specific identifier code 13 so that they can be recognized by the nodes that receive them.

Then, the stranger node SN resumes the search for an active network, returning to step 102.

If within the time TM₁, following upon transmission of the beacon, the stranger node SN does not detect any valid identifier code 13 (output NO from step 104), then (step 106) the stranger node SN verifies whether it possesses itself the prerogatives for forming a new independent network. Said prerogatives can be in part pre-arranged by a user and stored in the node (for example, the prerogatives can depend upon the importance of the user that has the node available) and in part determined by operating circumstances (contingent mission of the node, any interference that the node undergoes, likelihood of being intercepted, etc.). If the node has not the prerogatives for forming a new network (output NO from step 106), the stranger node SN resumes the network-search procedure, returning to step 102.

Otherwise (output YES from step 106), the stranger node SN goes to a step of network search/generation, creating a pseudo-network of which it is itself the only component as well as root node. In particular, the stranger node SN randomly selects an identifier code 13 of its own (step 120) and itself assumes the role of root node, switching on its own base station BS (step 121) and defining a transmission frame (for example, of the type shown in Figure 3). In addition, the stranger node SN, which is now a root node of its own mobile network, continues the search for active mobile networks in its vicinity, sending messages with its own node identifier and performing radio measurements in order to detect, by means of its own mobile station MS, the presence of other mobile networks (this state is indicated as state of "network search or creation", step 122). In this step, the stranger node SN transmits signals that carry the useful information (for example, the identifier code 13, synchronism information, frame structure, etc.) for enabling nodes that capture them to affiliate as fast as possible with the network of the stranger node SN (or vice versa).

If within a time shorter than TM₂ (output NO from step 123) the stranger node SN detects (output YES from step 125) an exploration signal generated by a leaf node of a mobile network with a degree of importance higher than its own, it attempts affiliation to the leaf node that issues said signal, going to step 112.

If, instead (output NO from step 125), within the time TM₂, the stranger node SN receives a request for affiliation (output YES from step 126) from another node, the stranger node SN starts the procedures of affiliation to its own network (step 127). Said procedures do not form the subject of the present invention and consequently are not illustrated in detail.

At the end of the time TM₂ (output YES from step 123), the stranger node SN modifies its own identifier code 13 and the timing of the frame (step 124), selecting, randomly or by means of a first algorithm provided for said purpose, an identifier code 13 different from the current one and staggering in time, randomly or by means of a second algorithm provided for said purpose, the frame timing. In this way, the possibilities of collision with other nodes that could have the same identifier code 13 is limited. With these new characteristics of the signals to be issued, control returns to step 122.

In practice, when the stranger node SN is found in the state of network search or creation, it modifies its own identifier code 13 and its own frame timing every TM₂ seconds.

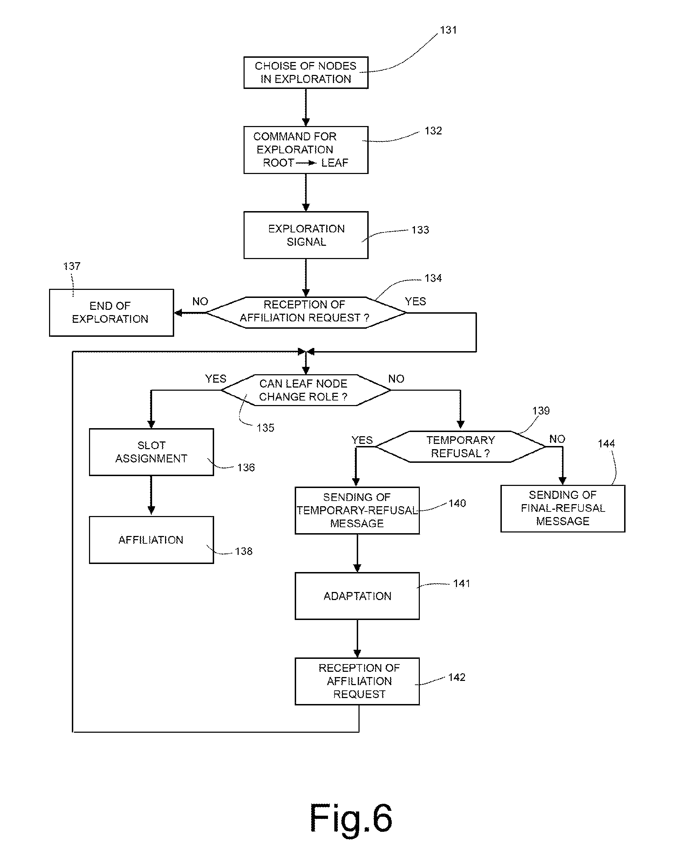

Figure 6 shows a block diagram that represents the steps, carried out by an active mobile network (for example the mobile network 10 of Figure 2), for identifying and possibly affiliating nodes (for example, the stranger node SN) that are in electromagnetic visibility of the leaf nodes 11 alone belonging to the mobile network 10.

For said purpose, the root node 1r of the mobile network 10 decides periodically (step 131) which leaf nodes 11 must be used as exploration nodes for identification of possible stranger nodes SN to be affiliated. The root node 1r can prearrange exploration cycles using one or more leaf nodes 11 in simultaneous exploration. The choice of the leaf nodes 11 to be sent in exploration depends upon different factors, as well as upon the expedience of maximizing the coverage of the territory of interest. For example, precedence may be given to the leaf nodes 11 that, in the course of the measurements that they make for creation of a node visibility matrix, capture the presence of signals, such as the beacon signals described above, coming from nodes SN that can potentially be affiliated.

Then (step 132), the root node 1r sends the commands for activation of the exploration procedure to the preselected leaf nodes 11, and the leaf nodes 11 in exploration send exploration signals (step 133) using the management slot that the root node 1r pre-arranges for said purpose.

The signals transmitted by the leaf nodes 11 in exploration contain the identifier code 13, with the degree of importance of the mobile network as described previously, and synchronism information that, according to the transceiver system used, enable stranger nodes SN to affiliate as fast as possible. A stranger node SN that receives and decodes signals transmitted by the leaf nodes 11 in exploration hence presents the information necessary for requesting affiliation to the mobile network by which the message has been generated or for attempting affiliation of the nodes of said mobile network.

In the case where a number of leaf nodes 11 are simultaneously in exploration, and hence must each send exploration signals of their own, each leaf node 11 uses a management slot of its own, different from the management slots used by the other leaf nodes 11, within the frame. As an alternative, if two leaf nodes 11 are at a sufficient distance as not to generate mutual interference with their transmissions, they can use simultaneously the same management slot. For example, while a leaf node 11 is in exploration (and transmits an exploration signal), the other leaf nodes 11, instructed by the root node 1r, can measure the level of signal that they receive from the leaf node 11 in exploration and deduce, from the measurement of the signal power, whether their simultaneous activation in one and the same management slot is tolerable.

If the leaf node in exploration does not receive requests for affiliation (output NO from step 134), the procedure terminates (step 137). When, instead, the leaf node 11 receives a request for affiliation (output YES from step 134), said request is sent back to the root node 1r, according to the normal communication procedures, using the slot provided by its affiliating node. On the basis of the set of the data that it receives, amongst which, for example, the degree of importance of the stranger node SN that has made the request for affiliation, and of the state of the network (for example, the saturation of one or more network resources, such as the slots available), the root node 1r establishes whether to refuse or accept the request for affiliation.

If the affiliation is immediately possible (output YES from step 135) the leaf node 11 in question is transformed, upon command from the root node 1r, into an internal node 1b. This means that reserved thereto is a communication slot among the ones available, and the base station BS of said node turns on so as to enable communication with the node just affiliated in said slot (step 136). For example, associated to the internal node 1b just transformed is the same slot used during transmission in exploration, thus enabling immediate affiliation of the stranger node SN (step 138). This, however, causes the loss of a management slot, which is assigned to data transmission. Hence, if necessary, typically when just one management slot is present, the root node 1r reserves in the frame a different slot to be used as management slot.

Instead, if the leaf node 11 in question cannot be transformed immediately into internal node 1b (output NO from step 135), the request for affiliation is refused (upon command from the root node 1r). The refusal can be temporary or final. In particular, the temporary refusal has the purpose of enabling the mobile network 10 to attempt adaptation so as to proceed with affiliation, for example freeing a transmission slot previously occupied by another internal node. In this case (output YES from block 139), upon command from the root node 1r, the leaf node 11 sends a message of temporary affiliation refusal to the stranger node SN that has made a request for affiliation (step 140). As discussed with reference to steps 113-117 of Figure 5, the message of refusal of affiliation is interpreted by the stranger node SN as invitation to re-attempt affiliation after a certain time interval ΔT. Next, the network 10 attempts modification of its topological structure and/or sharing of the resources in such a way as to enable transformation of the leaf node 11 into internal node (adaptation step 141), and sets itself in a state of waiting for a subsequent request for affiliation by the stranger node SN (step 142). As soon as said request has been received, it is evaluated, and control returns to step 135; in particular, if the adaptation procedure has been successful, the affiliation procedure is set under way (step 136); otherwise the network decides whether to proceed in the adaptation attempt (step 139) and in this case sends a new message of temporary refusal (step 140), or generates a message of definitive refusal (step 144).

The method described with reference to the block diagrams of Figures 5 and 6 can advantageously be applied to creation of a mobile network based upon a transceiver system according to the IEEE 802.16-2005 standard (known as WiMax), in particular using the TDD transceiving technique.

In this case, each node 1 comprises a base station BS operating according to the WiMax standard and a mobile station MS, which also operates according to the WiMax standard.

In this preferred application the frame has a duration of 20 ms, which is one of the durations envisaged by the WiMax standard. In turn, the frame is divided into eight slots, all with the same duration of 2.5 ms.

In each slot a portion of time is assigned for transmission/reception on the downlink channel and a portion of time is assigned for transmission/reception on the uplink channel. The limits of all the time slots dedicated to the eight downlink channels and to the eight uplink channels are set by means of the parameters that in the WiMax system are envisaged for this purpose and that enable setting-up of simultaneous connections between one base station BS and a multiplicity of mobile stations MS.

The identifier codes 13 are defined at a point corresponding to the preamble index. According to the WiMax standard, the preamble index contains "synchronization symbols", which are transmitted at the start of each slot, prior to any signal that travels on the downlink channel. In the WiMax system the number of the preamble indices is equal to 114, a number sufficient for distinguishing the identifier codes 13 of the eight slots and at the same time indicating the degree of importance of the network, leaving some of them available for particular uses (for example, for the beaconing procedure) or as a reserve for further uses.

In this case, the signals issued by the leaf nodes 11 in exploration comprise the synchronization symbol, characterized by its own preamble index, and the downlink-channel-descriptor (DCD) signals and uplink-channel-descriptor (UCD) signals. Owing to the way in which the WiMax standard is defined, these signals enable a node that decodes them to synchronize and send requests for affiliation to the network, according to the procedures described above.

There may moreover apply the procedures described previously with reference to the operations that the nodes must implement at the moment of turning-on to discover whether there is a network already active with which to affiliate, for entry into the state of search and creation of the network, and for procedures of exploration both by the mobile network and by the node that may potentially be affiliated.

Finally, it is evident that modifications and variations may be made to the present network and to the corresponding management method, without thereby departing from the scope of the present invention, defined by the annexed claims.

Furthermore, even though in the foregoing description reference is made to a type of tree network, the method described applies also to networks of a different type, for example mesh networks.

## Claims

1. A mobile wireless-communication network (10), comprising a plurality of nodes (1) each having a first station (BS) and a second station (MS) equipped with transmitting/receiving means (4, 5), the network including at least one root node (1r) having the role of network manager, a leaf node (11), and optionally an internal node (1b) connected to said root node through an own second station (MS) and to said leaf node through an own first station (BS),
wherein the leaf node (11) communicates with said internal node (1b) or root node (1r) through its own second station, but is not connected to any of said nodes of said network (10) through its own first station, said network being **characterized in that**:
the root node (1r) comprises means for generating an activation signal (131) for activating temporarily the first station (BS) of said leaf node (11);
the first station (BS) of said leaf node comprises emitting means activated temporarily by said root node and emitting (133) an exploration signal carrying at least one identification code (13) indicating a degree of importance of the network;
the first station (BS) of said leaf node comprises receiving means activated temporarily by said root node and configured to receive (134) at least one signal of request for affiliation by a stranger node (SN) not belonging to the network (10) and means configured to transmit said request for affiliation to said root node; and
said root node comprising means configured to generate a signal of acceptance (138) or refusal (140) of said request for affiliation on the basis of the signal of request for affiliation.

2. The network (10) according to Claim 1, wherein said root node (1r) comprises means configured to generate a communication frame (8) comprising a plurality of time slots (9) including at least one communication slot and at least one management slot, wherein said root node, said leaf node (11), and possibly said internal node (1b) comprise means for transmitting to each other data and said signal of request for affiliation in said communication slot, and wherein said leaf node (11) comprises means for transmitting said signal of acceptance or refusal in said management slot.

3. A method of exploring the vicinity of a mobile wireless-communication network (10) according to Claim 1 comprising a plurality of nodes (1) each having a first station (BS) and a second station (MS) equipped with transmitting/receiving means (4, 5), the network including at least one root node (1r) having the role of network manager (10), a leaf node (11), and optionally an internal node (1b) connected to said root node through an own second station (MS) and to said leaf node through an own first station (BS); comprising the steps of activating a communication between the leaf node (11) and said intermediate network node (1b) or the root node (1r) through the second station of said leaf node;
said method being **characterized by** the steps of:
generating, by the root node, a temporary activation signal (131) for activating the first station (BS) of said leaf node (11);
emitting (133), by the first station (BS) of the leaf node, an exploration signal containing at least one identification code (13) indicating a degree of importance of the network;
detecting (134), by the first station (BS) of said leaf node, a signal of request for affiliation emitted by a stranger node (SN) not belonging to the network (10);
transmitting said signal of request for affiliation from the leaf node to the root node; and
generating a signal of acceptance (138) or refusal (140) of said request for affiliation on the basis of the signal of request for affiliation.

4. The method according to Claim 3, comprising the steps of:
generating a transmission frame (8) including a plurality of time slots (9) comprising a first communication slot and at least one management slot;
exchanging data and said signal of request for affiliation between the root node, the leaf node, and possibly the internal node in said first communication slot; and
transmitting said refusal signal in said management slot.

5. The method according to Claim 4, wherein the identification code (13) identifies said management slot and a degree of importance of the network.

6. The method according to Claim 4 or Claim 5, wherein the step of generating an acceptance signal (138) comprises:
assigning a second communication slot (9) to the leaf node (11);
generating an activation signal (135) for activating the first station (BS) of the leaf node (11) during the second communication slot (9);
sending said acceptance signal using said second time slot (9) of said transmission frame (8).

7. The method according to Claim 6, wherein the step of assigning a second communication slot comprises:
assigning said management slot to the leaf node; and
assigning a free communication slot of said transmission frame (8) for management communications.

8. The method according to any one of Claims 4 to 7, wherein the step of generating a refusal signal comprises:
generating selectively a final-refusal signal (144) or a
temporary-refusal signal (140);
in the case of sending of the temporary-refusal signal, executing a process of adaptation (141) for modifying the topological structure and/or the sharing of resources of the network and including:
transforming the leaf node (11) into an internal node (1b);
awaiting a new signal of request for affiliation (142); and
generating said acceptance signal.

9. The method according to any one of the preceding claims, using an IEEE 802.16d or IEEE 802.16e (WiMAX) radio-access protocol.

10. A method of request for affiliation to a first mobile wireless-communication network (10) according to Claim 1 or Claim 2 by a stranger node (SN), the first network including at least one leaf node (11) emitting an exploration signal and the stranger node having a first station (BS) and a second station (MS) equipped with transmitting/receiving means (4, 5); comprising the steps of:
activating (102) said second communication station (MS);
detecting (107) at least one exploration signal emitted by the leaf node (11);
processing (108-111) said exploration signal; and
sending (117) a signal of request for affiliation.

11. The method according to Claim 10, comprising, after the activation step (102), the steps of:
seeking (103) the exploration signal for a first period of time (TM₀);
in the case of unsuccessful detection of the exploration signal within the first period of time, sending a beacon signal (105) within a second period of time (TM₁).

12. The method according to Claim 11, comprising the step of:
in case of unsuccessful detection of the exploration signal within the second period of time (TM₁), creating (106-121) a second network different from the first network assigning a role of network manager to the stranger node.

13. The method according to Claim 12, wherein the step of assigning a role of network manager comprises activating (121) the first station (BS), and the step of creating a second network comprises: a) seeking (122) the exploration signal issued by the leaf node; and b) sending (112) an own exploration signal.

14. The method according to Claim 13, comprising: repeating steps a) and b) for a third period of time (TM₂); modifying parameters (124) of its own exploration signal and repeating steps a) and b).

15. The method according to any one of Claims 10-14, wherein the step of processing said exploration signal comprises:
detecting the presence of a plurality of exploration signals (107) issued by a plurality of networks;
detecting a degree of importance (110) associated to each network (10) of said plurality of networks; and
selecting (110), from among said plurality of networks, a network (10) having maximum importance.

16. The method according to any one of Claims 10-15, moreover comprising the steps of:
after the step of sending a signal of request for affiliation (112), verifying the acceptance (113) of the request for affiliation;
if the request for affiliation is accepted, executing the affiliation (114);
otherwise, storing (116) a frame timing (T_{F}, T_{M}) of the exploration signal (8);
awaiting (117) a fourth period of time (ΔT); and
sending a new signal of request for affiliation (112) using the frame timing (T_{F}, T_{M}) stored.
